# EUROPEAN PATENT SPECIFICATION

(11) **EP 3 252 384 B1**
(45) Date of publication and mention of the grant of the patent: **29.01.2020**
(21) Application number: 16172100.6
(22) Date of filing: 31.05.2016
(51) Int. Cl.: F24D 3/08, F24D 3/18, F24D 19/10, F24D 17/00, F24D 17/02

(54) **APPARATUS FOR SPACE HEATING AND WARM WATER SUPPLY**
VORRICHTUNG ZUR RAUMHEIZUNG UND WARMWASSERVERSORGUNG
APPAREIL DE CHAUFFAGE DES LOCAUX ET APPROVISIONNEMENT EN EAU CHAUDE

(43) Date of publication of application: 06.12.2017
(73) Proprietor: Daikin Industries, Ltd., Osaka-shi, Osaka 530-8323 (JP); Daikin Europe N.V., 8400 Oostende (BE)
(72) Inventor: CHIKAMI, Hideo, 8400 Oostende (BE); VANSTEENKISTE, Wim, 8400 Oostende (BE)
(74) Representative: Global IP Europe Patentanwaltskanzlei

(56) References cited:
- EP-A2- 2 151 633
- JP-A- 2004 218 944

## Description

### Field of the invention

The invention relates to an apparatus for space heating and water supply, specifically an apparatus for space heating and water supply having a heat pump as a heat source.

### Background

Such an apparatus is known from EP 2 530 406 A1. This apparatus heats heating medium which circulates in a space heating circuit or a water supply circuit with the heat pump unit.

The apparatus above improves efficiency by using the heat pump unit as a heat source instead of using the conventional boiler such as fuel-fired boiler since heat pump units generally have better energy efficiency than conventional boilers.

The heat pump unit has a heat-source-side heat exchange means and a usage-side heat exchange means. A refrigerant circulates between the heat-source-side heat exchange means and the usage-side heat exchange means. At the heat-source-side heat exchange means, the refrigerant exchanges heat with the ambient air. At the usage-side heat exchange means, the refrigerant exchanges heat with the heating medium. When the heat pump unit heats the heating medium for space heating or water supply, the heat-source-side heat exchange means works as an evaporator and the usage-side heat exchange means works as a condenser.

During heating the heating medium, the surface of the heat-source-side heat exchange means obtains frost under a certain operating condition and thereby the efficiency of the heat pump unit may be deteriorated. In such a case, reversed cycle defrosting operation may be performed for defrosting. During the reversed cycle defrosting operation, the heat-source-side heat exchange means works as a condenser and the usage-side heat exchange means works as an evaporator. The reversed cycle defrosting operation is performed while circulating the heating medium. This is because the heating medium may freeze at the usage-side heat exchange means working as an evaporator.

Even when the heating medium circulates during the reversed cycle defrosting operation, there is a risk that the heating medium freezes at the usage-side heat exchange means if the total amount of the circulating heating medium is relatively small. Especially, the heating medium likely to freeze during the space heating since the total amount of the circulating heating medium often decreases depending on the operation load for the space heating.

To avoid such a risk, it is required to secure a certain amount of the heating medium circulating in the space heating circuit. On the other hand, less and less amount of heating medium is needed for high-sealed rooms/houses and the requirement for energy efficiency of space heating.

EP 2 151 633 A2 discloses an apparatus according to the preamble of claim 1, configured to be connected to a space heating unit and a water supply unit with a water tank so as to form a space heating circuit and a water supply circuit in which a heating medium is supplied to the space heating unit and the water supply unit, respectively, comprising: a heat pump unit having a compressor configured to compress a refrigerant, a first heat exchange means configured such that the refrigerant exchanges with ambient air therein, and a second heat exchange means configured such that the refrigerant exchanges heat with the heating medium; a circuit switching means configured to switch a flow circuit of the heating medium between the space heating circuit and the water supply circuit; an operation mode means configured to set an operation mode of the apparatus to a space heating mode or a water supply mode by controlling the circuit switching means such that the space heating circuit is activated during the space heating mode and the water supply circuit is activated during the water supply mode; and a heat pump control means configured to set an operation mode of the heat pump unit to a heating mode or a defrosting mode, the first heat exchange means working as an evaporator and the second heat exchange means working as a condenser during the heating mode, the first heat exchange means working as a condenser and the second heat exchange means working as an evaporator during the defrosting mode, and a detecting means configured to detect a temperature of the heating medium which has returned to the apparatus after circulating in the space heating unit or the water supply unit.

It is the object of the present invention to provide an apparatus for space heating and water supply having a heat pump unit and having high efficiency of the apparatus while relaxing the minimum limitation of the total amount of heating medium in the space heating circuit.

### Summary

The invention is defined in the independent claim 1. The dependent claims define preferred embodiments of the invention.

A first aspect of the present invention provides an apparatus configured to be connected to a space heating unit and a water supply unit with a water tank so as to form a space heating circuit and a water supply circuit in which a heating medium is supplied to the space heating unit and the water supply unit, respectively. The apparatus is provided with a heat pump unit, a circuit switching means, an operation mode means and a heat pump control means. The heat pump unit has a compressor, a first heat exchange means, and a second heat exchange means. The compressor is configured to compress a refrigerant. The first heat exchange means is configured such that the refrigerant exchanges with ambient air therein. The second heat exchange means is configured such that the refrigerant exchanges heat with the heating medium. The circuit switching means is configured to switch a flow circuit of the heating medium between the space heating circuit and the water supply circuit. The operation mode means is configured to set an operation mode of the apparatus to a space heating mode or a water supply mode by controlling the circuit switching means such that the space heating circuit is activated during the space heating mode and the water supply circuit is activated during the water supply mode. The heat pump control means is configured to set an operation mode of the heat pump unit to a heating mode or a defrosting mode. During the heating mode, the first heat exchange means works as an evaporator and the second heat exchange means working as a condenser. During the defrosting mode, the first heat exchange means works as a condenser and the second heat exchange means works as an evaporator. During the operation in the defrosting mode of the heat pump unit and during the operation of the space heating mode of the apparatus, the operation mode means is configured to switch the operation mode of the apparatus from the space heating mode to the water supply mode.

With the above configuration, it is possible to perform the defrosting mode with the heat of the heating medium circulating in the water supply circuit, even if the amount of heat of the heating medium circulating in the space heating circuit is not enough to complete the defrosting. Therefore, the defrosting can be completed in a short time while relaxing the minimum amount of the heating medium in the heating circuit.

According to the invention, the apparatus is further provided with a first determining means and a detecting means configured to detect a temperature of the heating medium which has returned to the apparatus after circulating in the space heating unit.

The first determining means is configured to determine, during the operation in the defrosting mode of the heat pump unit and during the operation of the space heating mode of the apparatus, whether the heating medium can freeze at the second heat exchange means. In accordance with the determination of the first determining means, when the temperature detected by the detecting means is lower than a predetermined temperature, the operation mode means is configured to switch the operation mode of the apparatus from the space heating mode to the water supply mode during the operation in the defrosting mode of the heat pump unit.

With the above embodiment of the apparatus mentioned above, the heat is not always taken away from the water supply circuit during the operation in the defrosting mode. When it is possible to finish the defrosting operation using the heat of the space heating circuit during the operation of the space heating mode of the apparatus, the heat of the water supply circuit is not used for defrosting operation. Therefore, it is possible to avoid a situation where it takes a long time after the apparatus starts the water supply operation until the temperature of the water in the tank reaches a target temperature due to a significant drop of the temperature of the water in the tank.

According to a preferred embodiment of the apparatus having the first determining means mentioned above, the operation mode means is configured to preserve, in accordance with the determination of the first determining means, the operation mode of the apparatus at the space heating mode prior to setting the operation mode of the apparatus to the water supply mode. In accordance with the determination of the first determining means and preservation of the operation mode of the apparatus at the space heating supply mode, the heat pump control means is configured to switch the operation mode of the heat pump unit from the defrosting mode to the heating mode. In accordance with the switching of the operation mode of the heat pump unit from the heating mode to the defrosting mode, the operation mode means is configured to set the operation mode of the apparatus to the water supply mode.

In the above preferred embodiment, the heat pump control means temporarily returns operation mode of the heat pump unit to the heating mode while the operation mode means preserving the operation mode of the apparatus at the space heating mode, in a case where the apparatus cannot continue defrosting during the operation of the space heating mode of the apparatus due to the low temperature of the heating medium. Therefore, it is possible to avoid a situation that the space heating is suspended for a long time.

Furthermore, in the above embodiment, the operation mode means sets the operation mode of the apparatus to the water supply mode when the defrosting mode is set after the defrosting mode is once discontinued due to the low temperature of the heating medium.

Therefore, the defrosting can be completed by utilizing the heat of the heating medium circulating in the water supply circuit in a shorter time than repeating the switching of the operation mode of the heat pump unit between the heating mode and the defrosting mode, while relaxing the limitation to the minimum amount of the heating medium in the space heating circuit.

According to another preferred embodiment of the apparatus having the first determining means mentioned above, the operation mode means is configured to switch the operation mode of the apparatus from the space heating mode to the water supply mode in accordance with the determination of the first determining means. The heat pump control means is configured to preserve the operation mode of the heat pump unit at the defrosting mode in accordance with the determination of the first determining means.

With the above preferred embodiment of the apparatus mentioned above, it is possible to complete the defrosting in a short time since the defrosting mode is maintained with the aid of the heat of the heating medium circulating in the water supply circuit even if the amount of the heating medium circulating in the space heating circuit is not enough to complete the defrosting.

According to another preferred embodiment of the apparatus having the first determining means mentioned above, the detecting means is arranged on upstream side of the second heat exchange means and on downstream side of the space heating unit and the water supply unit with respect to a flow direction of the heating medium. The detecting means is configured to detect temperature of the heating medium. The first determining means is configured to determine whether the heating medium can freeze at the second heat exchange means based on the temperature of the heating medium detected by the detecting means.

With the embodiment of any one of the apparatus mentioned-above, it is possible to precisely determine whether the heating medium can freeze at the second heat exchange means.

According to another preferred embodiment of the apparatus mentioned above, the apparatus is further provided with an electrical heating means and a second determining means. The electrical heating means is arranged in or on the water tank. The electrical heating means is configured to heat the water in the water tank. The second determining means is configured to determine, during the operation in the defrosting mode of the heat pump unit and during the operation of the water supply mode of the apparatus, whether the heating medium can freeze at the second heat exchange means. In accordance with the determination of the second determining means, the electrical heating means is activated during the operation of the apparatus in the water supply mode.

With this preferred embodiment of any one of the apparatus mentioned-above, it is possible to complete the defrosting even if the temperature of the heating medium circulating in the water supply circuit is not high enough to achieve the defrosting.

Further, the usage of the electrical heating means can make up for the heat of the water in the tank which is lost during the operation in the defrosting mode. Thus, the temperature of the water in the tank can be maintained or at least the temperature drop of the water in the tank can be suppressed. In an embodiment, the temperature of the water in the tank can be raised with the heat supplied from the electrical heating means.

According to another preferred embodiment of the apparatus having the electrical heating means and the second determining means mentioned above, the heat pump control means is further configured to suspend the operation of the heat pump unit for a predetermined time in accordance with the activation of the electrical heating means.

With this preferred embodiment of the apparatus with the electrical heating means, defrosting operation of the heat pump unit is suspended for a predetermined time. Preferably the suspension is maintained until the temperature of the heating medium reaches to a temperature high enough for defrosting. During the suspension of defrosting operation of the heat pump unit, heating medium is heated with the electrical heating means. It is therefore possible to avoid the risk that the heating medium freeze at the second heat exchange means in a more secure manner.

### BRIEF DESCRIPTION OF THE DRAWINGS

FIG.1 is a schematic diagram of a space heating and water supply system including an apparatus for space heating and warm water supply according to an embodiment of the present invention.
FIG.2 is a block diagram of the apparatus for space heating and warm water supply according to FIG.1.
FIG.3a and FIG.3b show a flow chart schematically representing a defrosting operation of the heat source unit when the apparatus according to FIG. 1 is operated for space heating.
FIG.4 shows a flow chart schematically representing a defrosting operation of the heat source unit when the apparatus according to FIG. 1 is operated for water supply.
FIG.5 is an alternative flow chart of FIG.3a.

### Detailed Description of Preferred Embodiments

Preferred embodiments of the apparatus for space heating and warm water supply according to the present invention will be described with reference to the drawings.

It should be understood that the detailed explanation are provided merely for the purpose of explanation, and are in no way to be construed as limiting of the present invention. While the present invention will be described with reference to exemplary preferred embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention will be described herein with reference to preferred structures, materials and embodiments, the present invention is not intended to be limited to the particulars disclosed herein; rather, the present invention extends to all configurations within the scope of the appended claims.

### 1. Space Heating and Water Supply System

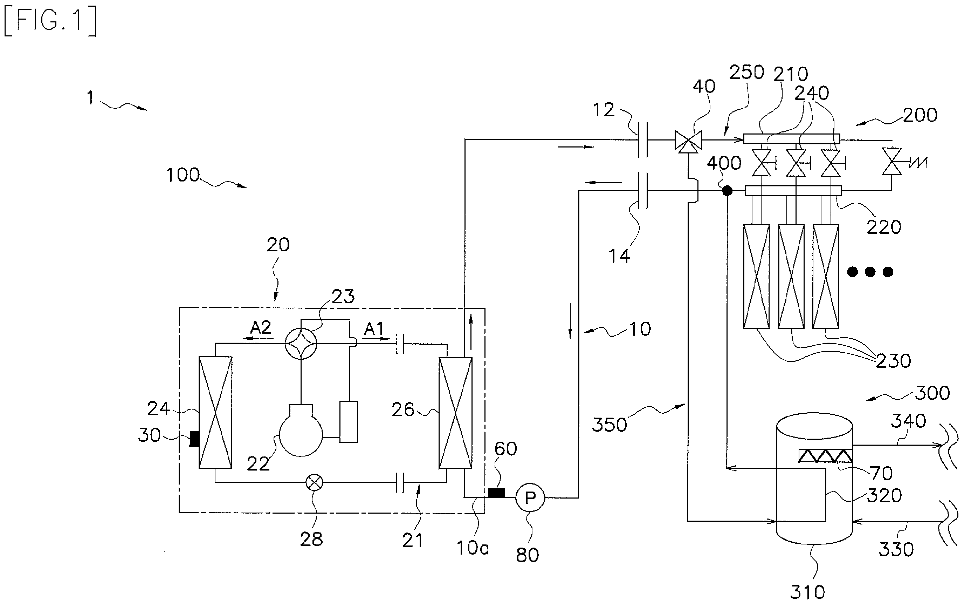

FIG.1 shows a schematic diagram of a space heating and water supply system 1 including the apparatus 100 as an embodiment of the apparatus for space heating and warm water supply according to the present invention.

For example, the space heating and water supply system 1 is used for space heating and warm water supply in a residential building. However, the space heating and water supply system 1 may be used in another type of building. The space heating and water supply system 1 includes the apparatus 100, a space heating unit 200, and a water supply unit 300.

The apparatus 100 heats a heating medium which is used for space heating and heating domestic water. The apparatus 100 has a heat pump unit 20 as a heat source to heat the heating medium as shown in FIG.1. For example, the heating medium is an aqueous medium. The type of heating medium is given here by way of example, and not by way of limitation. The apparatus 100 can supply the heating medium heated by the heat pump unit 20 to the space heating unit 200 and the water supply unit 300. The apparatus 100 can receive the heating medium returned from the space heating unit 200 or the water supply unit 300. The apparatus 100 has an outlet 12 of the heating medium through which the heating medium flows out toward the space heating unit 200 or the water supply unit 300. The apparatus 100 has an inlet 14 of the heating medium through which the heating medium retuned from the space heating unit 200 or the water supply unit 300 flows in. The configuration of the apparatus 100 will be explained in detail later.

The space heating unit 200 includes at least one heat emitter 230 such as a floor heating. In FIG.1 the space heating unit 200 includes a plurality of heat emitters 230. The type of the heat emitter 230 is not limited to the floor heating. The heat emitter 230 may be a radiator or a convector. Each of the heat emitters 230 is located in a space to be heated. The space heating unit 200 further includes an inlet header 210, an outlet header 220, and at least one valve 240. The inlet header 210 is connected to the outlet 12 of the apparatus 100 by piping. The outlet header 220 is connected to the inlet 14 of the apparatus 100 by piping. Each of the heat emitter 230 is connected to both of the inlet header 210 and the outlet header 220 by piping. The piping is configured such that the heating medium can flow in the heat emitter 230 from the inlet header 210 to the outlet header 220 through the piping. In order to control a flow of the heating medium through the heat emitters 230, a valve 240 is arranged on the piping between the inlet header 210 and each of the heat emitters 230 or on the piping between each of the heat emitters 230 and the outlet header 220. The space heating unit 200 further includes at least one thermostat (not shown) with a temperature sensor (not shown) for measuring the temperature in the space to be heated by the space heating unit 200. A user of the space heating unit 200 may set a target room temperature to the thermostat. The thermostat sends a signal to the apparatus 100 for requesting an operation of the apparatus 100 in a space heating mode based on the user's command and the temperature detected by the temperature sensor. The thermostat controls the operation of the valves 240 based on the target room temperature and the temperature detected by the temperature sensor. In a case that a part of the valves 240 are closed, the volume of the heating medium circulating in the space heating circuit 250 is reduced compared with a case that all of the valves 240 are opened.

The apparatus 100 is connected to a space heating unit 200 so as to form a space heating circuit 250 in which the heating medium is circulated. Specifically, the outlet 12 of the heating medium of the apparatus 100 is connected to the inlet header 210 of the space heating unit 200 by piping. The inlet 14 of the heating medium of the apparatus 100 is connected to the outlet header 220 of the space heating unit 200 by piping. Thereby, the space heating circuit 250 is formed. When the apparatus 100 is operated in the space heating mode during which the space heating circuit 250 is activated and the heat pump unit 20 is operated in a heating mode described later, the heating medium heated with the heat pump unit 20 is supplied to the space heating unit 200 in the space heating circuit 250. The space heating circuit is configured such that the heating medium having been used for space heating at the space heating unit 200 returns to the apparatus 100 in the space heating circuit 250 after having radiated its heat at the heat emitter 230.

The space heating unit 300 includes a water tank 310 and a heat exchange part 320. An inlet pipe 330 of the domestic water and an outlet pipe 340 of the domestic water are connected to the water tank 310. Domestic water is supplied to the water tank 310 through the inlet pipe 330 of the domestic water. Domestic water is stored in the water tank 310. The heat exchange part 320 is arranged in the water tank 310. The heat exchange part 320 has an inlet and an outlet of the heating medium. The inlet of the heat exchange part 320 is connected to outlet 12 of the heating medium of the apparatus 100 by piping. The outlet of the heat exchange part 320 is connected to inlet 14 of the heating medium of the apparatus 100 by piping. Domestic water in the water tank 310 is heated with the heating medium flowing in the heat exchange part 320. Heated domestic water flows out from the water tank 310 through the outlet pipe 340 of the domestic water. The water supply unit 300 further includes a controller (not shown) with a temperature sensor (not shown) for measuring the temperature of the water in the water tank 310. A user of the water supply unit 300 may set a target water temperature to the controller. The controller sends a signal to the apparatus 100 for requesting an operation of the apparatus 100 in a water supply mode based on the target water temperature and the temperature detected by the temperature sensor.

The apparatus 100 is connected to a water supply unit 300 having a water tank 310 so as to form a water supply circuit 350 in which the heating medium circulates. Specifically, the outlet 12 of the heating medium of the apparatus 100 is connected to the inlet of the heat exchange part 320 by piping. The inlet 14 of the heating medium of the apparatus 100 is connected to the outlet of the heat exchange part 320 by piping. Thereby, the water supply circuit 350 is formed. When the apparatus 100 is operated in the water supply mode during which the water supply circuit 350 is activated and the heat pump unit 20 is operated in the heating mode, the heating medium heated with the heat pump unit 20 is supplied to the water supply unit 300 in the water supply circuit 350. The water supply circuit 350 is configured such that the heating medium having been used for heating domestic water at the water supply unit 300 returns to the apparatus 100 in the water supply circuit 350 after having radiated its heat at the heat exchange part 320.

Both of the space heating circuit 250 and the water supply circuit 350 utilize piping which is arranged on the downstream of the converging point 400 of the space heating circuit 250 and the water supply circuit 350 and on the upstream of the circuit switching means 40 with respect to the flow direction of the heating medium. Specifically, both of the space heating circuit 250 and the water supply circuit 350 utilize piping which connects the outlet for the heating medium of the second heat exchanger 26 and the inlet for the heating medium of the circuit switching means 40 and piping which connects the converging point 400 of the space heating circuit 250 and the water supply circuit 350 and the inlet for the heating medium of the second heat exchanger 26 as shown in FIG.1. The piping commonly utilized by the space heating circuit 250 and the water supply circuit 350 is referred to as common piping.

### 2. Configuration of the Apparatus for Space Heating and Water Supply

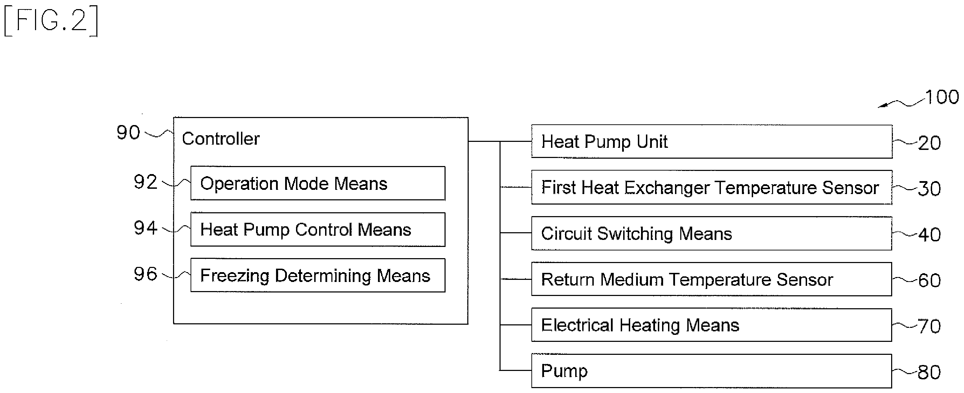

As shown in FIG.1, the apparatus 100 for space heating and water supply is mainly provided with piping 10, the heat pump unit 20, a first heat exchanger temperature sensor 30, a circuit switching means 40, a return medium temperature sensor 60, an electrical heating means 70, and a pump 80. As shown in FIG.2, the apparatus 100 is further provided with a controller 90.

The piping 10 constitutes a part of the space heating circuit 250 and the water supply circuit 350. The piping 10 connects the inlet 14 of the heating medium, the pump 80, a second heat exchanger 26 of the heat pump unit 20, and the outlet 12 of the heating medium. Thereby, the heating medium flows as follows. The heating medium flowing into the inlet 14 of the heating medium is sucked into the pump 80 through the piping 10. The pump 80 delivers the heating medium toward the second heat exchanger 26 of the heat pump unit 20 through the piping 10. The heating medium passing through the second heat exchanger 26 of the heat pump unit 20 flows through the piping 10 toward the outlet 12 of the heating medium. The heating medium then flows out from the outlet 12 of the heating medium toward the space heating unit 200 or the water supply unit 300.

The heat pump unit 20 is configured to heat the heating medium flowing in the space heating circuit 250 or the water supply circuit 350. The heat pump unit 20 is driven by electricity. The heat pump unit 20 includes a conventional refrigerant circuit 21 in which a compressor 22, a flow direction switching mechanism 23, the second heat exchanger 26, an expansion mechanism 28 and a first heat exchanger 24 is connected by the piping 10. The refrigerant is, for example, R-410A or another HFC-based refrigerant circulates. The type of refrigerant is given here by way of example, and not by way of limitation.

The compressor 22 is a mechanism to compress the refrigerant. A motor (not shown) of the compressor 22 may be driven at variable frequency so that the heat pump unit 20 may be driven under full load but also under a partial load. When the operation mode of the heat pump unit 20 is set to a heating mode, described hereinafter, the frequency of the motor of the compressor 22 may be decided, for example, based on the ambient temperature around the heat pump unit 20 detected by an ambient temperature sensor (not shown). Alternatively, the motor (not shown) of the compressor 22 may be driven at constant frequency when the operation mode of the heat pump unit 20 is set to the heating mode, although it is preferable that motor of the compressor 22 is driven at variable frequency. When the operation mode of the heat pump unit 20 is set to a defrosting mode, described hereinafter, the frequency of the motor of the compressor 22 may be set to a predetermined frequency, for example.

The flow direction switching mechanism 23 is configured to switch a flow direction of the refrigerant between a first direction and a second direction in the refrigerant circuit 21. When the refrigerant flows in the first direction in the refrigerant circuit 21, the refrigerant compressed by the compressor 22 flows through the flow direction switching mechanism 23, the second heat exchanger 26, the expansion mechanism 28, the first heat exchanger 24 in this order and returns to a suction side of the compressor 22 (see an arrow A1 and solid line in the flow direction switching mechanism 23 in FIG.1). When the refrigerant flows in the second direction in the refrigerant circuit 21, the refrigerant compressed by the compressor 22 flows through the flow direction switching mechanism 23, the first heat exchanger 24, the expansion mechanism 28, and the second heat exchanger 26 in this order and returns the suction side of to the compressor 22 (see an arrow A2 and dashed line in the flow direction switching mechanism 23 in FIG.1). When the refrigerant flows in the first direction in the refrigerant circuit 21, the second heat exchanger 26 works as a condenser and the first heat exchanger 24 works as an evaporator. When the refrigerant flows in the second direction in the refrigerant circuit 21, the first heat exchanger 24 works as a condenser and the second heat exchanger 26 works as an evaporator.

In this embodiment, the flow direction switching mechanism 23 is a four-way switching valve configured to switch the flow direction of the refrigerant between the first direction and the second direction in the refrigerant circuit 21. However, the flow direction switching mechanism 23 is not limited to a four-way switching valve. For example, the flow direction switching mechanism 23 may be configured by combining a plurality of electromagnetic valves, so as to have the function of switching the refrigerant flow direction in the same manner as described above.

The first heat exchanger 24 is configured such that the refrigerant exchanges heat with ambient air passing through the first heat exchanger 24. When the heat pump unit 20 operates in a heating mode, the first heat exchanger 24 works as an evaporator of the refrigerant and the second heat exchanger 26 works as a condenser of the refrigerant. Thereby the heating medium passing through the second heat exchanger 26 is heated up by the refrigerant flowing in the refrigerant circuit 21. During the heating mode, the flow direction mechanism 23 connects the piping of the heat pump unit 20 such that the refrigerant flows along the first direction in the refrigerant circuit 21. When the heat pump unit 20 operates in a defrosting mode, the first heat exchanger 24 works as a condenser of the refrigerant and the second heat exchanger 26 works as an evaporator of the refrigerant. In other words, during the defrosting mode, the flow direction mechanism 23 connects the piping of the heat pump unit 20 such that the refrigerant flows along the second direction in the refrigerant circuit 21. Thereby, the refrigerant passes through the second heat exchanger 26 to be heated up by the heating medium flowing in the space heating circuit 250 or the water supply circuit 350, and the heated refrigerant further flows to the heat exchanger 24. Then, the heat of the refrigerant flowing through the first heat exchanger 24 is transferred to a surface of the first heat exchanger 24 so that the first heat exchanger 24 is defrosted.

The expansion mechanism 28 is an electric expansion valve which depressurizes refrigerant flowing in the refrigerant circuit 21.

The second heat exchanger 26 is configured such that the heating medium circulating in the space heating circuit 250 or in the water supply circuit 350 exchanges heat with the refrigerant circulating in the refrigerant circuit 21. When the heat pump unit 20 operates in the heating mode, the second heat exchanger 26 functions as a condenser of the refrigerant flowing in the first direction. When the heat pump unit 20 operates in the defrosting mode, the second heat exchanger 26 functions as an evaporator of the refrigerant flowing in the second direction.

The first heat exchanger temperature sensor 30 is configured to detect a temperature of the refrigerant flowing through the first heat exchanger 24. The first heat exchanger temperature sensor 30 is preferably arranged on the first heat exchanger 24.

The circuit switching means 40 is configured to switch a flow circuit of the heating medium between the space heating circuit 250 and the water supply circuit 350. The circuit switching means 40 selectively connects the outlet 12 of the heating medium of the apparatus 100 to the inlet header 210 of the space heating unit 200 or the inlet of the heat exchange part 320 of the water supply unit 300. Alternatively, the circuit switching means 40 may be arranged on the piping between the inlet 14 of the heating medium of the apparatus 100 and the outlet header 220 of the space heating unit 200 and between the inlet 14 of the heating medium of the apparatus 100 and the outlet of the heat exchange part 320 of the water supply unit 300. In this case, the outlet 12 of the heating medium of the apparatus 100 may be connected to the inlet header 210 of the space heating unit 200 and the inlet of the heat exchange part 320 of the water supply unit 300 by piping. The circuit switching means 40 is, for example, an electric or solenoid three-way valve arranged on the piping as shown in FIG.1. However, the circuit switching means 40 may be configured by a plurality of electric or solenoid valves arranged on the piping.

The return medium temperature sensor 60 is configured to detect a temperature of the heating medium which has returned to the apparatus 100 after circulating in the space heating unit 200 or the water supply unit 300. The return medium temperature sensor 60 is arranged on or in a pipe 10a which constitutes a part of the piping 10. The return medium temperature sensor 60 is arranged on the upstream side of both of the heat pump unit 20, and on the downstream side of both of the space heating unit 200 and the water supply unit 300 with respect to a flow direction of the heating medium. The return medium temperature sensor 60 is arranged at a location on or in the piping 10 between the inlet 14 of the heating medium and the second heat exchanger 26 of the heat pump unit 20. Preferably, the return medium temperature sensor 60 is located immediately before the first heat exchanger 24 with respect to the flow direction of the heating medium.

The electrical heating means 70 is arranged in or on the water tank 310. The electrical heating means 70 is configured to heat the water in the water tank 310.

The pump 80 is arranged on the piping 10 to circulate the heating medium in the space heating circuit 250 or the water supply circuit 350. In the FIG.1, the pump 80 is arranged on the upstream side of the heat pump unit 20 with respect to a flow direction of the heating medium. However, the pump 80 may be arranged on the downstream side of the heat pump unit 20 with respect to a flow direction of the heating medium.

The controller 90 controls the operation of the apparatus 100. The controller 90 includes a microcomputer and a memory (not shown). The microcomputer executes programs stored in the memory, whereby the controller 90 controls the operation of the components of the apparatus 100 based on the signals received from the space heating unit 200 and the water supply unit 300 and the detection results from the sensors including the first heat exchanger temperature sensor 30 and the return medium temperature sensor 60.

The controller 90 is electrically connected to the heat pump unit 20, the first heat exchanger temperature sensor 30, the circuit switching means 40, the return medium temperature sensor 60, the electrical heating means 70, and the pump 80 as shown in FIG.2. The controller 90 is also electrically connected with the thermostat of the space heating unit 200 and the controller of the water supply unit 300 to exchange signals.

The controller 90 includes an operation mode means 92, a heat pump control means 94, and a freezing determining means 96 as function sections as shown in FIG.2.

The operation mode means 92 is configured to switch the operation mode of the apparatus 100 between the space heating mode and the water supply mode by controlling the circuit switching means 40.

The space heating circuit 250 is activated during the space heating mode. When the operation mode means 92 switches the operation mode of the apparatus 100 to the space heating mode, the circuit switching means 40 is controlled to connect the outlet 12 of the heating medium of the apparatus 100 to the inlet header 210. Thereby the heating medium circulates in the space heating circuit 250.

The water supply circuit 350 is activated during the water supply mode. When the operation mode means 92 switches the operation mode of the apparatus 100 to the water supply mode, the circuit switching means 40 is controlled to connect the outlet 12 of the heating medium of the apparatus 100 to the inlet of the heat exchange part 320. Thereby, the heating medium circulates in the water supply circuit 350.

When the heat pump unit 20 is operated in the heating mode, the operation mode of the apparatus 100 to which the operation mode means 92 switches is determined based on the signals sent from the space heating unit 200 and/or the water supply unit 300.

However, when the heat pump unit 20 operates in the defrosting mode, the operation mode of the apparatus 100 to which the operation mode means 92 switches is determined further based on the other factors. It will be explained later how the operation mode means 92 determines the operation mode of the apparatus 100.

The heat pump control means 94 controls the operation of the heat pump unit 20. The heat pump control means 94 controls various elements of the heat pump unit 20, such as the compressor 22 (the mortar of the compressor 22), the flow direction switching mechanism 23, and the expansion mechanism 28. The heat pump control means 94 controls various elements of the heat pump unit 20 according to the signals received from the space heating unit 200 and/or the water supply unit 300 and the detection results from the sensors including the first heat exchanger temperature sensor 30 and the return medium temperature sensor 60.

The heat pump control means 94 sets the operation mode of the heat pump unit 20. The heat pump unit 20 has at least a heating mode and a defrosting mode as operation modes.

When the heat pump control means 94 sets the operation mode of the heat pump unit 20 to the heating mode, the heat pump control means 94 sets the flow direction of the refrigerant in the refrigerant circuit 21 to the first direction by controlling the flow direction switching mechanism 23. When the heat pump control means 94 sets the operation mode of the heat pump unit 20 to the defrosting mode, the heat pump control means 94 sets the flow direction of the refrigerant in the refrigerant circuit 21 to the second direction by controlling the flow direction switching mechanism 23.

It will be explained later how the heat pump control means 94 determines the operation mode of the heat pump unit 20.

The determining means 96 determines, during the operation in the defrosting mode of the heat pump unit 20 and during the operation of the space heating mode or the water supply mode of the apparatus 100, whether the heating medium can freeze at the second heat exchanger 26. Preferably, the determining means 96 determines whether the heating medium can freeze at the second heat exchanger 26 based on the temperature of the heating medium detected by the return medium temperature sensor 60. Specifically, the determining means 96 determines that the heating medium can freeze at the second heat exchanger 26 in a case when the temperature of the heating medium detected by the return medium temperature sensor 60 is lower than a predetermined temperature Tf.

### 3. Defrosting Operation

In this section, it will be mainly explained how the defrosting operation of the heat pump unit 20 (defrosting of the frost on the first heat exchanger 24) is executed.

### 3-1. Defrosting operation initiated during the space heating mode

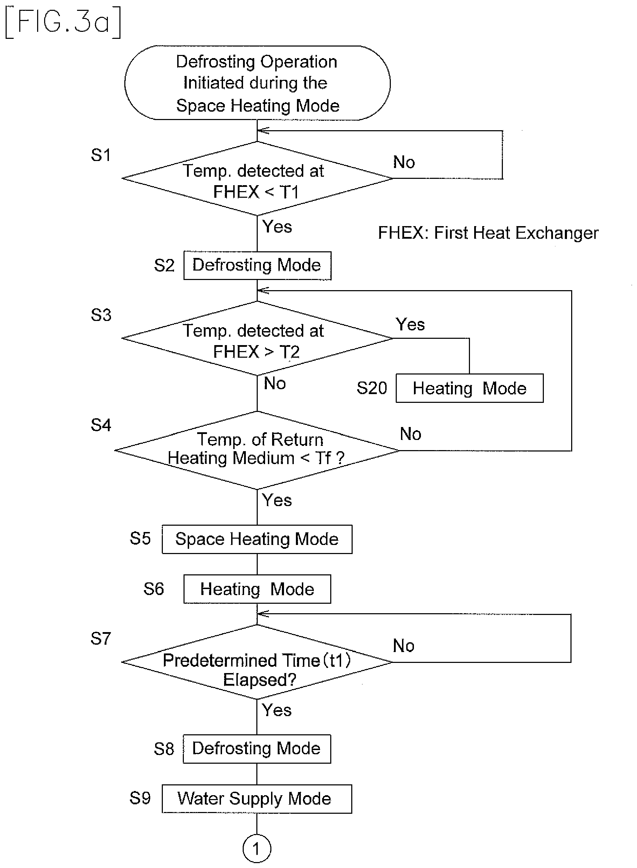

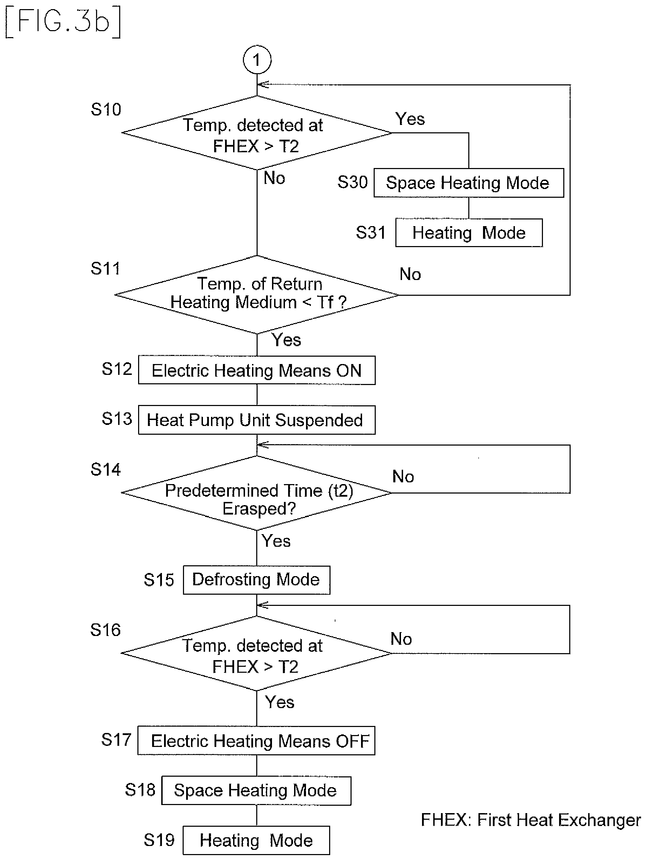

It is explained how the defrosting operation of the heat pump unit 20 is executed when the apparatus 100 operates in the space heating mode in reference to FIG.3a and FIG.3b.

In the following explanation, it is assumed that the operation mode means 92 sets the operation mode of the apparatus 100 to the space heating mode, and that the heat pump control means 94 sets the operation mode of the heat pump unit 20 to the heating mode prior to step S1.

At the step S1, the heat pump control means 94 determines whether the defrosting operation is necessary for the heat pump unit 20 based on the temperature detected by the first heat exchanger temperature sensor 30. If yes, the process advances to step S2. The heat pump control means 94 determines "yes" when the temperature detected by the first heat exchanger temperature sensor 30 is lower than a first predetermined temperature T1. The first predetermined temperature T1 is predetermined so that the defrosting operation is performed at a proper timing. The step S1 is repeated until the heat pump control means 94 determines "yes."

At the step S2, the heat pump control means 94 sets the operation mode of the heat pump unit 20 to the defrosting mode.

At the step S3 the heat pump control means 94 determines whether the defrosting operation of the heat pump unit 20 has been completed based on the temperature detected by the first heat exchanger temperature sensor 30. If no, the process advances to step S4. Otherwise, the process advances to step S20. The heat pump control means 94 determines "yes" when the temperature detected by the first heat exchanger temperature sensor 30 is higher than a second predetermined temperature T2. The second predetermined temperature T2 is predetermined so that the heat pump unit 20 can return the heating operation at a proper timing. The second predetermined temperature T2 is higher than the first predetermined temperature T1.

At the step S20, the heat pump control means 94 sets the operation mode of the heat pump unit 20 to the heating mode.

At the step S4, the freezing determining means 96 determines, during the operation in the defrosting mode of the heat pump unit 20 and during the operation of the space heating mode of the apparatus 100, whether the heating medium can freeze at the second heat exchanger 26. If yes, the process advances to the step S5. Otherwise, the process returns to the step S3. The determination is made based on the temperature of the heating medium detected by the return medium temperature sensor 60. The freezing determining means 96 determines that the heating medium can freeze at the second heat exchanger 26 when the temperature detected by the return medium temperature sensor 60 is lower than the predetermined temperature Tf.

At the step S5, the operation mode means 92 preserves, in accordance with the determination of the freezing determining means 96 at the step S4, the apparatus 100 in the space heating mode prior to the step S9 for setting the operation mode of the apparatus 100 to the water supply mode as mentioned below.

At the step S6, in accordance with the determination of freezing determining means 96 at the step S4 and preservation of the apparatus 100 in the space heating supply mode at the step S5, the heat pump control means 94 switches the operation mode of the heat pump unit 20 from the defrosting mode to the heating mode. At the step S7, it is determined whether a predetermined time (t1) has elapsed since the heat pump control means 94 switched the operation mode of the heat pump unit 20 from the defrosting mode to the heating mode at step S6. A predetermined time is, for example, 10 minutes. If yes, the process advances to step S8. The step S7 is repeated until the heat pump control means 94 determines "yes."

In the above embodiment, the process proceeds to step S8 based on the determination, in step S7, whether a predetermined time (t1) has elapsed since the heat pump control means 94 switched the operation mode of the heat pump unit 20 from the defrosting mode to the heating mode at step S6. However, it may be determined whether the process proceeds to step S8 based on other conditions. For example, the process may proceed to step S8 based on the temperature detected by the first heat exchanger temperature sensor 30. The process may proceed to step S8 when the temperature detected by the first heat exchanger temperature sensor 30 is lower than a first predetermined temperature T1.

At the step S8, the heat pump control means 94 sets the operation mode of the heat pump unit 20 to the defrosting mode.

At the step S9, in accordance with the switching of the operation mode of the heat pump unit 20 from the heating mode to the defrosting mode, the operation mode means 92 sets the operation mode of the apparatus 100 to the water supply mode. In other words, at the step S9, during the operation in the defrosting mode of the heat pump unit 20, the operation mode means 92 switches the operation mode of the apparatus 100 from the space heating mode to the water supply mode.

In the flow chart above, the step S8 is executed before the step S9. However, the step S9 may be executed at the same time or just before the step S8. The phrase "the operation mode means 92 sets/switches the operation mode of the apparatus 100 to the water supply mode during the operation in the defrosting mode of the heat pump unit 20" includes a case when the operation mode means 92 sets the operation mode of the apparatus 100 to the water supply mode at the same time when or just before the heat pump control means 94 sets the operation mode of the heat pump unit 20 to the defrosting mode.

As explained above, the heat pump control means 94 switches the operation mode of the heat pump unit 20 from the defrosting mode to the heating mode in step S6 while preserving the operation mode of the apparatus 100 in the space heating mode in prior to operating the heat pump unit 20 in the defrosting mode during the water supply mode of the apparatus 100. This is because the following reasons.

When the freezing determining means 96 determines that the heating medium can freeze at the second heat exchanger 26 in step S4, the temperature of the heating medium flowing in the space heating circuit 250 is relatively low. The temperature of the heating medium in the common piping, which is arranged on the downstream of the converging point 400 of the space heating circuit 250 and the water supply circuit 350 and on the upstream of the circuit switching means 40 with respect to the flow direction of the heating medium and constitutes a part of the space heating circuit 250, is also relatively low. Therefore, if steps S5 to S8 are omitted and the operating mode of the apparatus 100 is switched to the water supply mode while preserving the operating mode of heat pump unit 20 in the defrosting mode, the heat of the heating medium in the common piping is scarcely used for defrosting. However, by operating the heat pump unit 20 in the heating mode in order to heat the heating medium flowing in the space heating circuit 250 prior to operating the heat pump unit 20 in the defrosting mode during the water supply mode of the apparatus 100, the heat of the heating medium in the common piping can be also used for defrosting. Therefore, it is possible to complete the defrosting in a short time.

Further, by operating the heat pump control means in the heating mode while preserving the operation mode of the apparatus 100 in the space heating mode as explained in steps S5 to S7, it is possible to avoid a situation that the space heating is suspended for a long time and the temperature of the space to be heated by the space heating unit 200 significantly drops.

At the step S10, the heat pump control means 94 determines whether the defrosting operation of the heat pump unit 20 has been completed based on the temperature detected by the first heat exchanger temperature sensor 30. The determination is made the same as at the step S3. When the heat pump control means 94 determines "no", the process advances to step S11. Otherwise, the process advances to the step S30.

At the step S30, the operation mode means 92 sets the operation mode of the apparatus 100 to the space heating mode.

At the step S31, the heat pump control means 94 sets the operation mode of the heat pump unit 20 to the heating mode.

Although the step S30 is executed prior to the step S31 in the flow chart above, the step S31 may be executed at the same time or just before the step S30.

At the step S11, the freezing determining means 96 determines, during the operation in the defrosting mode of the heat pump unit 20 and during the operation of the water supply mode of the apparatus 100, whether the heating medium can freeze at the second heat exchanger 26. This determination is made based on the temperature of the heating medium detected by the return medium temperature sensor 60. The freezing determining means 96 determines "yes" when the temperature detected by the return medium temperature sensor 60 is lower than the predetermined temperature Tf. If yes, the process advances to the step S12. Otherwise, the process returns to the step S10.

In the above embodiment, the predetermined temperature Tf used in step S11 is equal to the predetermined temperature Tf used in step S4. However, the predetermined temperature Tf used in step S11 may be different from the predetermined temperature Tf used in step S4. Further, the predetermined temperatures Tf used in step S4 and/or step S11 may be changed according to the flow rate of the heating medium flowing through the piping 10 detected by a flow sensor (not shown).

At the step S12, in accordance with the determination of the freezing determining means 96 at the step S11, the electrical heating means 70 is activated during the operation of the apparatus 100 in the water supply mode.

At the step S13, the heat pump control means 94 suspends the operation of the heat pump unit 20 in accordance with the activation of the electrical heating means 70.

The step S12 is executed before the step S13 in the flow chart above. However, the step S13 may be executed at the same time or just before the step S12. The phrase "the heat pump control means 94 suspends the operation of the heat pump unit 20 in accordance with the activation of the electrical heating means 70" includes a case when the heat pump control means 94 suspends the operation of the heat pump unit 20 at the same time when or just before the electrical heating means 70 is activated.

At the step S14, it is determined whether a predetermined time (t2) has elapsed since the heat pump control means 94 suspends the operation of the heat pump unit 20 in accordance with the activation of the electrical heating means 70 at the step S13. The predetermined time (t2) is determined so that the temperature of the heating medium circulating in the water supply circuit becomes high enough to achieve the defrosting. If "yes", the process advances to step S15. The step S14 is repeated until the determination result becomes "yes."

At the step S15, the heat pump control means 94 restarts the operation of the heat pump unit 20 in the defrosting mode.

At the step S16, the heat pump control means 94 determines whether the defrosting operation of the heat pump unit 20 has been completed based on the temperature detected by the first heat exchanger temperature sensor 30. This determination is made the same as at the step S10. The heat pump control means 94 determines "yes" when temperature detected by the first heat exchanger temperature sensor 30 is larger than the second predetermined temperature T2. If "yes," the process advances to step S17. The step S16 is repeated until the heat pump control means 94 determines "yes."

At the step S17, the electrical heating means 70 is turned off.

At the step S18, the operation mode means 92 sets the operation mode of the apparatus 100 to the space heating mode.

At the step S19, the heat pump control means 94 sets the operation mode of the heat pump unit 20 to the heating mode.

The order of the steps S17 to S19 in FIG. 3b is an example of the process. The order of the steps S17 to S19 may be changed as needed.

### 3-2. Defrosting operation initiated during the water supply mode

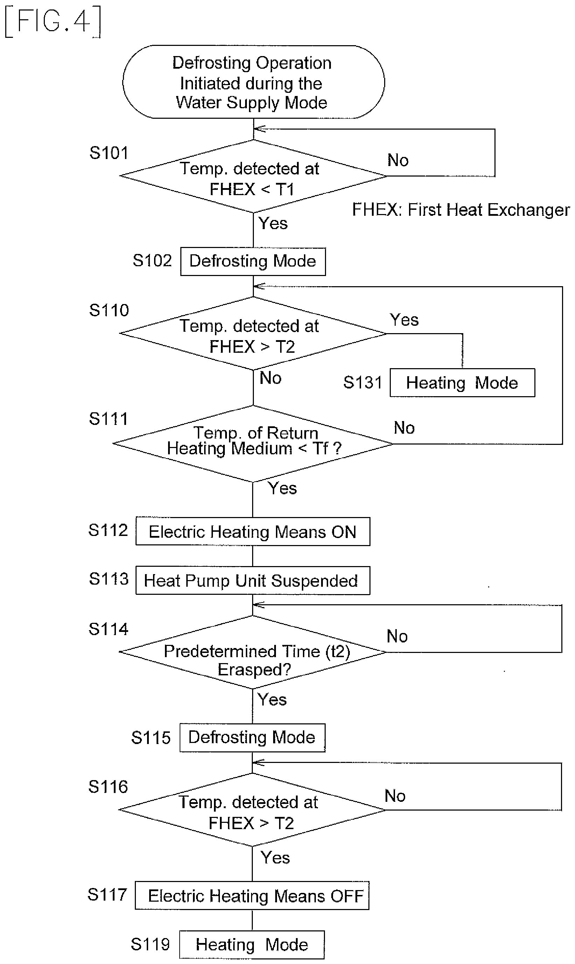

It is explained how the defrosting operation of the heat pump unit 20 is executed when the apparatus 100 operates in the water supply mode in reference to FIG.4.

In the following explanation, it is assumed that the operation mode means 92 sets the operation mode of the apparatus 100 to the water supply mode, and that the heat pump control means 94 sets the operation mode of the heat pump unit 20 to the heating mode prior to step S101.

At the step S101, the heat pump control means 94 determines whether the defrosting operation of the heat pump unit 20 is necessary based on the temperature detected by the first heat exchanger temperature sensor 30. The determination is made the same as at the step S1 mentioned above. The heat pump control means 94 determines "yes" when temperature detected by the first heat exchanger temperature sensor 30 is lower than the first predetermined temperature T1. If "yes," the process advances to step S102. The step S101 is repeated until the heat pump control means 94 determines "yes."

At the step S102, the heat pump control means 94 sets the operation mode of the heat pump unit 20 to the defrosting mode.

At the step S110, the heat pump control means 94 determines whether the defrosting operation of the heat pump unit 20 has been completed based on the temperature detected by the first heat exchanger temperature sensor 30. The determination is made the same as at the step S10 mentioned above. The heat pump control means 94 determines "no" when the temperature detected by the first heat exchanger temperature sensor 30 is equal to or lower than the second predetermined temperature T2. If "no," the process advances to the step S111. Otherwise, the process advances to the step S131.

At the step S131, the heat pump control means 94 sets the operation mode of the heat pump unit 20 to the heating mode.

At the step S111, the freezing determining means 96 determines whether the heating medium can freeze at the second heat exchanger 26 based on the temperature of the heating medium detected by the return medium temperature sensor 60. The determination is made the same as at the step S11. The freezing determining means 96 determines "yes" when the temperature detected by the return medium temperature sensor 60 is lower than the predetermined temperature Tf. If "yes", the process advances to the step S111. Otherwise, the process returns to the step S110.

The steps S112 to S117 and the step S119 are the same as the steps S12 to S17 and the step S19 described above, therefore the explanation of these steps is omitted.

In the flowchart shown in FIG.4, a step corresponding to the step S18 in FIG.3b does not exist. In other words, there is no step to set the operation mode of the apparatus 100 to the space heating mode. This is because the apparatus 100 starts the water supply operation after the defrosting operation of the heat pump unit 20 has been completed.

### 4. Variations

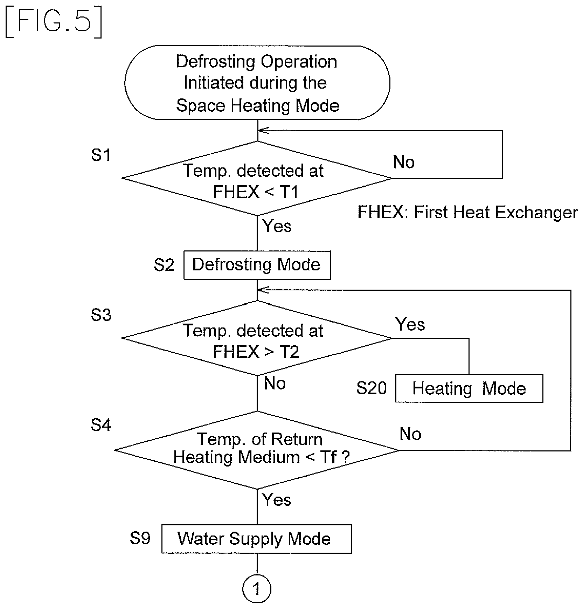

Variations of the above mentioned embodiments will be described below. Some or all of the variations can be combined except they are not contrary to each other.
(1) In the above embodiment, during the operation in the defrosting mode of the heat pump unit 20 and during the operation of the space heating mode of the apparatus 100, the operation mode means 92 sets the operation mode of the apparatus 100 to the water supply mode during the operation in the defrosting mode of the heat pump unit 20 based on the determination of the freezing determining means 96.
   However, during the operation in the defrosting mode of the heat pump unit 20 and during the operation of the space heating mode of the apparatus 100, the operation mode means 92 may always set the operation mode of the apparatus 100 to the water supply mode during the operation of the heat pump unit 20 in the defrosting mode. However, it is preferable not to use the heating medium circulating in the water supply circuit for defrosting operation of the heat pump unit 20 in a case where the defrosting operation of the heat pump unit 20 can be completed with the heating medium circulating in the space heating circuit.
(2) In the flowchart according to FIG.3a, when the freezing determining means 96 determines that heating medium can freeze at the second heat exchanger 26 at step S4, the heat pump control means 94 switches the operation mode of the heat pump unit 20 from the defrosting mode to the heating mode at step S6.
   However, the flowchart according to FIG.3a can be replaced with the flowchart according to FIG.5. In the flowchart according to FIG.5, the steps S5 to S8 are omitted.
   FIG.5 shows a process initiated during the operation in the defrosting mode of the heat pump unit 20 and during the operation of the space heating mode of the apparatus 100. The operation mode means 92 switches the operation mode of the apparatus 100 from the space heating mode to the water supply mode in accordance with the determination of the freezing determining means 96 on the possibility of freezing of the heating medium at the second heat exchanger 26. The heat pump control means 94 preserves the heat pump unit 20 in the defrosting mode operation in accordance with the determination on the possibility of the freezing of the heating medium at the second heat exchanger 26 by the freezing determining means 96.
(3) In the above embodiment, the electrical heating means 70 is arranged in or on the water tank 310 for heating the water in the water tank 310. However, it is not limited to this configuration.

In another preferred embodiment, an additional heat source unit is attached to the water supply circuit 300 to heat at least the heating medium circulating in the water supply circuit 300. The additional heat source unit may include a heat exchanger and a burner. The heat exchanger is preferably arranged in series with the second heat exchanger 26 in the water supply circuit 300. The burner is configured to heat the heating medium flowing through the second heat exchanger 26.

The burner has substantially the same function as the electrical heating means 70. By activating the burner at step S12 in FIG.3b and at step S112 in FIG.4 instead of turning on the electrical heating means 70, it is possible to heat the water in the water tank 310.

## Claims

1. An apparatus (100) configured to be connected to a space heating unit (200) and a water supply unit (300) with a water tank (310) so as to form a space heating circuit (250) and a water supply circuit (350) in which a heating medium is supplied to the space heating unit (200) and the water supply unit (300), respectively, comprising:
a heat pump unit (20) having
a compressor (22) configured to compress a refrigerant,
a first heat exchange means (24) configured such that the refrigerant exchanges with ambient air therein, and
a second heat exchange means (26) configured such that the refrigerant exchanges heat with the heating medium;
a circuit switching means (40) configured to switch a flow circuit of the heating medium between the space heating circuit (250) and the water supply circuit (350);
an operation mode means (92) configured to set an operation mode of the apparatus (100) to a space heating mode or a water supply mode by controlling the circuit switching means (40) such that the space heating circuit (250) is activated during the space heating mode and the water supply circuit (350) is activated during the water supply mode; and
a heat pump control means (94) configured to set an operation mode of the heat pump unit (20) to a heating mode or a defrosting mode, the first heat exchange means (24) working as an evaporator and the second heat exchange means (26) working as a condenser during the heating mode, the first heat exchange means (24) working as a condenser and the second heat exchange means (26) working as an evaporator during the defrosting mode, and
a detecting means (60) configured to detect a temperature of the heating medium which has returned to the apparatus (100) after circulating in the space heating unit (200) or the water supply unit (300),
**characterized by**
a first determining means (96) configured to determine, when the defrosting mode is set, the space heating mode is set, and the temperature detected by the detecting means (60) is lower than a predetermined temperature, that the heating medium can freeze at the second heat means (26)
wherein
when the defrosting mode is set and the space heating mode is set, the operation mode means (92) is configured to switch the operation mode of the apparatus (100) from the space heating mode to the water supply mode on condition that the first determining means (96) has determined that the heating medium can freeze at the second heat means (26).

2. The apparatus (100) according to claim 1, wherein
the operation mode means (92) is configured to preserve, in accordance with the determination of the first determining means (96), the operation mode of the apparatus (100) at the space heating mode prior to setting the operation mode of the apparatus (100) to the water supply mode,
in accordance with the determination of the first determining means (96) and preservation of the operation mode of the apparatus (100) at the space heating supply mode, the heat pump control means (94) is configured to switch the operation mode of the heat pump unit (20) from the defrosting mode to the heating mode, and
in accordance with the switching of the operation mode of the heat pump unit (20) from the heating mode to the defrosting mode, the operation mode means (92) is configured to set the operation mode of the apparatus (100) to the water supply mode.

3. The apparatus (100) according to claim 1, wherein
the operation mode means (92) is configured to switch the operation mode of the apparatus (100) from the space heating mode to the water supply mode in accordance with the determination of the first determining means (96); and
the heat pump control means (94) is configured to preserve the operation mode of the heat pump unit (20) at the defrosting mode in accordance with the determination of the first determining means (96).

4. The apparatus (100) according to any one of claims 1 to 3, wherein
the detecting means (60) is arranged on upstream side of the second heat exchange means (26) and on downstream side of the space heating unit (200) and the water supply unit (300) with respect to a flow direction of the heating medium.

5. The apparatus (100) according to any one of claims 1 to 4, further comprising
an electrical heating means (70) arranged in or on the water tank (310) and configured to heat the water in the water tank (310); and
a second determining means (96) configured to determine, when the defrosting mode is set, the water supply mode is set, and the temperature detected by the detecting means (60) is lower than a predetermined temperature, that the heating medium can freeze at the second heat exchange means (26),
wherein
in accordance with the determination of the second determining means (96), the electrical heating means (70) is activated during the operation of the apparatus (100) in the water supply mode.

6. The apparatus according to claim 5, wherein
the heat pump control means (94) is further configured to suspend the operation of the heat pump unit (20) at the same time when or just before the electrical heating means (70) is activated to suspend the operation of the heat pump unit (20), and keep the operation suspended for a predetermined time.

## Patentansprüche

1. Vorrichtung (100), die konfiguriert ist, mit einer Raumheizeinheit (200) und einer Wasserversorgungseinheit (300) mit einem Wassertank (310) verbunden zu werden, um einen Raumheizkreislauf (250) und einen Wasserversorgungskreislauf (350) zu bilden, in dem der Raumheizeinheit (200) bzw. der Wasserversorgungseinheit (300) ein Heizmedium zugeführt wird, die aufweist:
eine Wärmepumpeneinheit (20), die aufweist:
einen Verdichter (22), der konfiguriert ist, ein Kältemittel zu verdichten,
ein erstes Wärmetauschmittel (24), das so konfiguriert ist, dass das Kältemittel mit der Umgebungsluft darin Wärme austauscht, und
ein zweites Wärmetauschmittel (26), das so konfiguriert ist, dass das Kältemittel mit dem Heizmedium Wärme austauscht;
ein Kreislaufumschaltmittel (40), das konfiguriert ist, einen Flusskreislauf des Heizmediums zwischen dem Raumheizkreislauf (250) und dem Wasserversorgungskreislauf (350) umzuschalten;
ein Betriebsmodusmittel (92), das konfiguriert ist, einen Betriebsmodus der Vorrichtung (100) auf einen Raumheizmodus oder einen Wasserversorgungsmodus durch Steuern des Kreislaufumschaltmittels (40) einzustellen, so dass der Raumheizkreislauf (250) während des Raumheizmodus aktiviert ist und der Wasserversorgungskreislauf (350) während des Wasserversorgungsmodus aktiviert ist; und
ein Wärmepumpen-Steuermittel (94), das konfiguriert ist, einen Betriebsmodus der Wärmepumpeneinheit (20) auf einen Heizmodus oder einen Abtaumodus einzustellen, wobei das erste Wärmetauschmittel (24) während des Heizmodus als ein Verdampfer arbeitet und das zweite Wärmetauschmittel (26) als ein Kondensator arbeitet und während des Abtaumodus das erste Wärmetauschmittel (24) als ein Kondensator arbeitet und das zweite Wärmetauschmittel (26) als ein Verdampfer arbeitet, und
ein Erfassungsmittel (60), das konfiguriert ist, eine Temperatur des Heizmediums zu erfassen, das zur Vorrichtung (100) nach der Umwälzung in der Raumheizeinheit (200) oder der Wasserversorgungseinheit (300) zurückgekehrt ist, **gekennzeichnet durch**
eine erstes Feststellungsmittel (96), das konfiguriert ist, festzustellen, wenn der Abtaumodus eingestellt ist, der Raumheizmodus eingestellt ist und die durch das Erfassungsmittel (60) erfasste Temperatur niedriger als eine vorgegebene Temperatur ist, dass das Heizmedium am zweiten Wärmetauschmittel (26) gefrieren kann,
wobei
wenn der Abtaumodus eingestellt ist und der Raumheizmodus eingestellt ist, das Betriebsmodusmittel (92) konfiguriert ist, den Betriebsmodus der Vorrichtung (100) vom Raumheizmodus zum Wasserversorgungsmodus unter der Voraussetzung umzuschalten, dass das erste Feststellungsmittel (96) festgestellt hat, dass das Heizmedium am zweiten Wärmetauschmittel (26) gefrieren kann.

2. Vorrichtung (100) nach Anspruch 1, wobei
das Betriebsmodusmittel (92) konfiguriert ist, entsprechend der Feststellung des ersten Feststellungsmittels (96) vor dem Einstellen des Betriebsmodus der Vorrichtung (100) auf den Wasserversorgungsmodus den Betriebsmodus der Vorrichtung (100) auf dem Raumheizmodus beizubehalten, entsprechend der Feststellung des ersten Feststellungsmittels (96) und der Beibehaltung des Betriebsmodus der Vorrichtung (100) auf dem Raumheizmodus das Wärmepumpen-Steuermittel (94) konfiguriert ist, den Betriebsmodus der Wärmepumpeneinheit (20) vom Abtaumodus auf den Heizmodus umzuschalten, und
entsprechend dem Umschalten des Betriebsmodus der Wärmepumpeneinheit (20) vom Heizmodus zum Abtaumodus das Betriebsmodusmittel (92) konfiguriert ist, den Betriebsmodus der Vorrichtung (100) auf den Wasserversorgungsmodus einzustellen.

3. Vorrichtung (100) nach Anspruch 1, wobei
das Betriebsmodusmittel (92) konfiguriert ist, entsprechend der Feststellung des ersten Feststellungsmittels (96) den Betriebsmodus der Vorrichtung (100) vom Raumheizmodus auf den Wasserversorgungsmodus umzuschalten; und
das Wärmepumpen-Steuermittel (94) konfiguriert ist, entsprechend der Feststellung des ersten Feststellungsmittels (96) den Betriebsmodus der Wärmepumpeneinheit (20) auf dem Abtaumodus beizubehalten.

4. Vorrichtung (100) nach einem der Ansprüche 1 bis 3, wobei das Erfassungsmittel (60) bezüglich einer Flussrichtung des Heizmediums auf der vorgelagerten Seite des zweiten Wärmetauschmittels (26) und auf der nachgelagerten Seite der Raumheizeinheit (200) und der Wasserversorgungseinheit (300) angeordnet ist.

5. Vorrichtung (100) nach einem der Ansprüche 1 bis 4, das ferner aufweist
ein elektrisches Heizmittel (70), das im oder am Wassertank (310) angeordnet und konfiguriert ist, das Wasser im Wassertank (310) zu erwärmen; und
ein zweites Feststellungsmittel (96), das konfiguriert ist, festzustellen, wenn der Abtaumodus eingestellt ist, der Wasserversorgungsmodus eingestellt ist und die durch das Erfassungsmittel (60) erfasste Temperatur niedriger als eine vorgegebene Temperatur ist, dass das Heizmedium am zweiten Wärmetauschmittel (26) gefrieren kann,
wobei
entsprechend der Feststellung des zweiten Feststellungsmittels (96) das elektrische Heizmittel (70) während des Betriebs der Vorrichtung (100) im Wasserversorgungsmodus aktiviert ist.

6. Vorrichtung nach Anspruch 5, wobei
das Wärmepumpen-Steuermittel (94) ferner konfiguriert ist, den Betrieb der Wärmepumpeneinheit (20) zur selben Zeit auszusetzen, wenn oder genau bevor das elektrische Heizmittel (70) aktiviert wird, um den Betrieb der Wärmepumpeneinheit (20) auszusetzen und den Betrieb für eine vorgegebene Zeit ausgesetzt zu lassen.

## Revendications

1. Dispositif (100) prévu pour être relié à une unité de chauffage de locaux (200) et à une unité d'alimentation en eau (300) avec un réservoir d'eau (310) de manière à former un circuit de chauffage de locaux (250) et un circuit d'alimentation en eau (350) où un fluide de chauffage est respectivement refoulé vers l'unité de chauffage de locaux (200) et l'unité d'alimentation en eau (300), comprenant :
une unité (20) de pompe à chaleur comportant un compresseur (22) prévu pour comprimer un réfrigérant, un premier moyen d'échange de chaleur (24) prévu de manière à soumettre à l'intérieur le réfrigérant à un échange de chaleur avec l'air ambiant, et
un deuxième moyen d'échange de chaleur (26) prévu de manière à soumettre le réfrigérant à un échange de chaleur avec le fluide de chauffage ;
un moyen de commutation (40) de circuit prévu pour commuter un circuit d'écoulement du fluide de chauffage entre le circuit de chauffage de locaux (250) et le circuit d'alimentation en eau (350) ;
une commande de mode de fonctionnement (92) prévue pour régler le mode de fonctionnement du dispositif (100) sur un mode de chauffage de locaux ou un mode d'alimentation en eau par commande du moyen de commutation (40) de circuit de manière à activer le circuit de chauffage de locaux (250) pendant le mode de chauffage de locaux, et le circuit d'alimentation en eau (350) pendant le mode d'alimentation en eau ; et
un moyen de commande (94) de pompe à chaleur prévu pour régler le mode de fonctionnement de l'unité (20) de pompe à chaleur sur un mode de chauffage ou un mode de dégivrage, le premier moyen d'échange de chaleur (24) fonctionnant comme évaporateur et le deuxième moyen d'échange de chaleur (26) fonctionnant comme condensateur pendant le mode de chauffage, le premier moyen d'échange de chaleur (24) fonctionnant comme condensateur et le deuxième moyen d'échange de chaleur (26) fonctionnant comme évaporateur pendant le mode de dégivrage, et
un moyen de détection (60) prévu pour détecter la température du fluide de chauffage retourné vers le dispositif (100) après circulation dans l'unité de chauffage de locaux (200) ou l'unité d'alimentation en eau (300),
**caractérisé par**
un premier moyen de détermination (96) prévu pour déterminer, quand le mode de dégivrage est réglé, le mode de chauffage de locaux est réglé, et la température détectée par le moyen de détection (60) est inférieure à une température définie, que le fluide de chauffage peut geler dans le deuxième moyen d'échange de chaleur (26), où,
si le mode de dégivrage est réglé et le mode de chauffage de locaux est réglé, la commande de mode de fonctionnement (92) est prévue pour commuter le mode de fonctionnement du dispositif (100) du mode de chauffage de locaux au mode d'alimentation en eau à la condition que le premier moyen de détermination (96) ait déterminé que le fluide de chauffage peut geler dans le deuxième moyen d'échange de chaleur (26).

2. Dispositif (100) selon la revendication 1, où
la commande de mode de fonctionnement (92) est prévue pour maintenir, en fonction de la détermination du premier moyen de détermination (96), le mode de fonctionnement du dispositif (100) sur le mode de chauffage de locaux avant de régler le mode de fonctionnement du dispositif (100) sur le mode d'alimentation en eau,
en fonction de la détermination du premier moyen de détermination (96) et du maintien du mode de fonctionnement du dispositif (100) sur le mode de chauffage de locaux, le moyen de commande (94) de pompe à chaleur est prévu pour commuter le mode de fonctionnement de l'unité (20) de pompe à chaleur du mode de dégivrage au mode de chauffage, et en fonction de la commutation du mode de fonctionnement de l'unité (20) de pompe à chaleur du mode de chauffage au mode de dégivrage, la commande de mode de fonctionnement (92) est prévue pour régler le mode de fonctionnement du dispositif (100) en mode d'alimentation en eau.

3. Dispositif (100) selon la revendication 1, où
la commande de mode de fonctionnement (92) est prévue pour commuter le mode de fonctionnement du dispositif (100) du mode de chauffage de locaux au mode d'alimentation en eau en fonction de la détermination du premier moyen de détermination (96) ; et
le moyen de commande (94) de pompe à chaleur est prévu pour maintenir le mode de fonctionnement de l'unité (20) de pompe à chaleur sur le mode de dégivrage en fonction de la détermination du premier moyen de détermination (96).

4. Dispositif (100) selon l'une des revendications 1 à 3, où
le moyen de détection (60) est disposé en amont du deuxième moyen d'échange de chaleur (26) et en aval de l'unité de chauffage de locaux (200) et de l'unité d'alimentation en eau (300) par rapport au sens d'écoulement du fluide de chauffage.

5. Dispositif (100) selon l'une des revendications 1 à 4, comprenant en outre
un moyen de chauffage électrique (70) disposé dans ou sur le réservoir d'eau (310) et prévu pour chauffer l'eau dans le réservoir d'eau (310) ; et
un deuxième moyen de détermination (96) prévu pour déterminer, quand le mode de dégivrage est réglé, le mode d'alimentation en eau est réglé, et la température détectée par le moyen de détection (60) est inférieure à une température définie, que le fluide de chauffage peut geler dans le deuxième moyen d'échange de chaleur (26),
où,
en fonction de la détermination du deuxième moyen de détermination (96), le moyen de chauffage électrique (70) est activé pendant le fonctionnement du dispositif (100) en mode d'alimentation en eau.

6. Dispositif selon la revendication 5, où
le moyen de commande (94) de pompe à chaleur est en outre prévu pour interrompre le fonctionnement de l'unité (20) de pompe à chaleur simultanément à, ou juste avant l'activation du moyen de chauffage électrique (70) pour suspendre le fonctionnement de l'unité de pompe à chaleur (20), et maintenir l'interruption de fonctionnement pendant une durée définie.
